# EUROPEAN PATENT SPECIFICATION

(11) **EP 1 412 391 B1**
(45) Date of publication and mention of the grant of the patent: **14.10.2009**
(21) Application number: 02745687.0
(22) Date of filing: 29.07.2002
(51) Int. Cl.: C08B 37/00

(54) **CHITOSAN PREPARATION**
VERFAHREN ZUR HERSTELLUNG VON CHITOSAN
PR PARATION DE CHITOSANE

(30) Priority: 02.08.2001 NO 20013802; 06.12.2001 NO 20015986
(43) Date of publication of application: 28.04.2004
(73) Proprietor: Advanced Biopolymers AS, 7491 Trondheim (NO)
(72) Inventor: VARUM, Kjell Morten, N-7491 Trondheim (NO); SMIDSROD, Olav, N-7491 Trondheim (NO)
(74) Representative: Livgard, Kim Are Birkeli
(86) International application number: PCT/GB2002/003471
(87) International publication number: WO 2003/011912

(56) References cited:
- WO-A-01/68714
- FR-A- 2 701 266
- JP-A- 11 005 803
- US-A- 4 195 175
- DATABASE CHEMABS [Online] CHEMICAL ABSTRACTS SERVICE, COLUMBUS, OHIO, US; retrieved from STN Database accession no. 133:318786 XP002215943 & ROBERTS G.A.F; WOOD, FA : "inter-source reproducibility of the chitin deacetylation process" ADVANCES IN CHITIN SCIENCE, vol. 4, 2000, pages 34-39, XP001106239
- DATABASE CHEMABS [Online] CHEMICAL ABSTRACTS SERVICE, COLUMBUS, OHIO, US; retrieved from STN Database accession no. 110:215081 XP002215944 & PL 142 173 B (BRZESKI, MACIEJ) 30 September 1987 (1987-09-30)
- MUZZARELLI R ET AL: "N-(CARBOXYMETHYL) CHITOSAN, A VERSATILE CHITIN DERIVATIVE" CHIMICA OGGI, TEKNOSCIENZE, MILANO, IT, vol. 11, no. 10, 1 October 1993 (1993-10-01), pages 31-35, XP000650575 ISSN: 0392-839X

## Description

The invention relates to particulate amorphous chitin and a process for the preparation of chitosan.

Chitin is a natural nitrogenous mucopolysaccharide of formula (C₈H₁₃N₅)ₙ which occurs in the exoskeletons of invertebrates and also in fungi. In particular it is a major component of the exoskeletons of crustacea such as shrimp, crab, prawn and lobster. More particularly chitin is poly N-acetyl-D-glucosamine. Thus chitin consists of (1→4)-linked 2-acetamido-2-deoxy-β-D-glucose (GlcNac; the A-unit). The physical structure of chitin is highly ordered, and the most abundant form is α-chitin which is available as a waste material from the shellfish food industry. In α-chitin the chains are antiparallel, and extensively hydrogen-bonded. Another form is β-chitin, which can be isolated from, for example the pen of the squid *Loligo* and the spines of the diatom *Thalassiosíra fluviatilis.* In β-chitin the chains are parallel, and the chains are less hydrogen bonded compared with α-chitin.

Chitin is insoluble in water, even at acidic pH values, and in most organic solvents. This has served to limit the applications for which it is used.

The N-acetyl groups in chitin can be cleaved off to yield the product known as chitosan. Chitosan has many known uses, e. g. in pharmaceutical and cosmetic compositions, and as fillers, absorbants, carriers and supports.

Chitosan may be regarded as a family of water-soluble polysaccharides consisting of (1 → 4)-linked A-units and units of 2-amino-2-deoxy-β-D-glucose (GlcN; the D-unit) in varying relative abundances and sequences.

The distinction here between chitin and chitosan is based on the insolubility of chitin in dilute acid solution and the solubility of chitosan in the same dilute acid solution (see Roberts, G. A. F.,"Chitin Chemistry" (1991), pages 6-7).

The definition of fully water-soluble chitosan given on page 6 of Roberts (supra) is related to the fact that chitosans are generally only soluble in water when the free amino groups of D-units are protonated. Such protonation can be achieved by the addition of a controlled amount of an acid, e. g. acetic acid.

However, chitosan can also be prepared in different salt forms, i.e. with a protonated amino-group in the D-units and a negatively charged counterion (e. g. formate, acetate, chloride or another negative ion), which make it soluble in water without the addition of an acid.

Procedures for the preparation of such chitosan salts are described in the literature (see for example Draget et al,Biomaterials 13 : 635-638 (1992), Vårum et al. Carbohydrate Polymers 28 : 187-193 (1995), and US-A5,599, 916).

One parameter used to characterize chitosans is F_{A}, the relative fraction of the saccharide units which are A rather than D units.

To illustrate the structure of chitosan, the following schematic representation of the chemical structure of three different chitosans with varying compositions of A and D-units are given:
DDDDDDDDDDDDDDDDDDDDDDDDDDDDDDDDDDDDDDDD
   Part of a fully N-deacetylated chitosan molecule
   (F_{A}=0.00)
DDDADDADDDDDAADDADDDDDADADDDDAADDDDADDDD
   Part of a partially N-acetylated chitosan molecule
   (F_{A}=0.25)
DAAADDADDDDAAAADADDADDADDDDADAAAADDAADAA
   Part of a partially N-acetylated chitosan molecule
   (F_{A}=O. 50)

In a binary heteropolysaccharide like chitosan, the chemical structure of the molecule is not fully characterised by knowledge of the chemical composition (i.e. F_{A}) alone. Both the sequence of the two monomers along the chains and their distribution among the chains must be known in order to fully characterize the chemical structure. One way of characterizing the sequence of the two monomer units along the chain is to determine the nearest-neighbour frequencies of the two monomer units, and to compare the frequencies with values obtained from statistical models. NMR-studies have thus shown that water soluble chitosans prepared both homogeneously and heterogeneously have a random distribution of acetylated and deacetylated units along the chain (see Vårum et al. Carbohydr. Res. 211: 17-23 (1991) and 217 : 19-27 (1991)).

The presence of one monomer residue with a hydrophilic and protonizable amino group and another monomer residue with a hydrophobic acetyl group, where the relative amounts of the two monomers can be varied, can affect chitosan's physical properties in solution and in the gel and solid states, as well as its interactions with other molecules, cells and other biological and non-biological matter. However, the commercial use of chitosan has so far been limited to chitosan samples with a low fraction of acetylated units (F_{A} < 0. 15) due partly to the lack of inexpensive methods to prepare other chitosans on a large scale, and due partly to the limited scientific understanding of the functional properties of chitosans with a higher F_{A}.

It should be noted that besides deacetylation, in the production of chitosan from chitin, depolymerisation may also occur and chitosan can be produced with a wide range of degrees of acetylation and a wide range of molecular weights. In general, however, one remaining problem with commercially available chitosan is its insolubility at physiological pH values.

The production of chitosan from chitin is generally carried out as either a homogeneous reaction or as a heterogeneous reaction. In the homogeneous reaction chitin is suspended in alkali and the suspension is cooled with ice to bring the chitin into solution; in the heterogeneous reaction particulate chitin is dispersed in a hot alkaline solution, generally sodium hydroxide (see e.g. WO0168714). In the case of the homogeneous reaction, the F_{A} of the chitosan obtained is generally 0.3 to 0.7. In the case of the heterogeneous reaction, the F_{A} of the chitosan obtained is generally in the range of 0 to 0.15. Where a chitosan with a different degree of deacetylation is required it may be necessary to re-acetylate the chitosan. In the case of the homogeneous reaction, the remaining N-acetyl groups are generally randomly located along the polymeric backbone of the chitosan product. In the case of the heterogeneous reaction, a small fraction of insoluble chitin-like material is most often present in the product together with an acid-soluble fraction with a near random distribution of acetyl groups along the polymeric backbones.

Descriptions of prior art deacetylation procedures may be found in: US-A-4195175; Vårum et al, pages 127-136 in" Advances in chitin chemistry", Ed. C. J. Brine, 1992; Ottøy et al, Carbohydrate Polymers 29 : 17-24 (1996); Sannan et al, Macromol. Chem. 176 : 1191-1195 (1975); Sannan et al, Macromol. Chem. 177 : 3589-3600 (1976); Kurita et al, Chemistry Letters 1597-1598 (1989); and CA-A-2101079.

Enhanced performance, in several applications, has recently been found for more highly acetylated chitosan fractions (see Smidsrød et al, pages 1 to 11, in"Chitin and Chitosan - Chitin and Chitosan in Life Science" ; Eds. T. Uragami et al., Kodansha Scientific, Japan (2001) (ISDN 4-906464-13-0)). Of importance is increased solubility at neutral pH-values, a controllable degradation rate by lysozymes, strong interactions with hydrophobic surfaces
(e. g. fat particles and cell surfaces) thereby giving enhanced fat binding properties and flocculation, enhanced destabilisation effects on oil-in-water-emulsions, and extended utility in a number of cosmetic, nutraceutical and biomedical applications.

More highly acetylated chitosans have also recently been shown to flocculate bacterial cells more effectively (see Strand et al. Biomacromolecules 2 : 126- 133 (2001)).

However the known procedures for preparation of more highly acetylated chitosans suffer from disadvantages which make them unsuitable for upscaling to industrial production.

Thus, for example, for the heterogeneous deacetylation process without swelling, it is necessary to extract the product with an acid in order to separate the unreacted chitin from the water-soluble chitosan; this involves removal of water in addition to reduced yield of the highly acetylated chitosan product.

The reacetylation of a highly deacetylated chitosan, in addition to the deacetylation step, involves solubilization of the chitosan, use of organic chemicals such as acetic anhydride and methanol, and isolation of the final product.

The homogeneous deacetylation procedure involves solubilisation of the chitin by addition of ice, and isolation of the chitosan from the solution. Moreover, to avoid the chitin solution having too high a viscosity, large volumes of aqueous lye are needed in the reaction medium. This homogeneous deacetylation procedure therefore results in a more expensive product compared to the product of a heterogeneous deacetylation procedure.

PL142173 disclose a process for the preparation of chitosan involving swelling of chitin in water for a period of 30-200 minutes followed by deacetylation in alkali. The deacetylated product is then filtered, rinsed to neutral reaction, dried and ground to obtain chitosan.

We have now surprisingly found that if in the heterogeneous deacetylation reaction the chitin is first subjected to a prolonged low temperature alkaline swelling stage a chitosan product may be obtained with a more random distribution of residual N-acetyl groups along the polymeric chains, with a degree of deacetylation which can be as low or high as desired, with a degree of depolymerisation which may if desired be lower than in the conventional products, and if desired with an enhanced water-solubility at physiological pHs.

Thus, a first aspect of the present invention relates to a process for the preparation of chitosan which process comprises:
a) swelling particulate chitin with an alkaline solution at a temperature in the range - 6° to 30°C for a period of at least 24 hours if pressure and/or irradiation is applied or for a period of at least 36 hours if pressure and/or irradiation is not applied, and
b) subsequently reacting the resultant swollen particulate chitin with an alkaline solution at a temperature that is at least 5°C higher than said swelling temperature but not higher than the boiling point of the solution, whereby to cause deacetylation to occur.

The chitin used in the process of the invention is preferably chitin extracted from invertebrate exoskeletons, e. g. by deproteinisation and demineralisation. Thus the chitin is preferably α-chitin. Especially preferably this chitin is extracted from crustacean exoskeletons, particularly shrimp, krill, lobster or crab exoskeletons and clam shells.

The term shrimp is used herein to denote both prawn and shrimp as well as similar species such as scampi. The term lobster is used herein to denote both lobster and similar species such as crayfish and langoustine.

Exoskeletons from arctic prawn (*Pandalus borealis*) are especially preferred. Such crustacean exoskeletons are available as a waste product in the food production industry. However, although the chitin used as the starting material is preferably isolated from crustacean shells (e. g. shrimp, clam, krill, crab and lobster shell), other chitin sources may be used in the process of the invention, e.g. β-chitin from sources such as squid pens and diatoms. Moreover other chitins, such as γ-chitin may also be used. The chitin starting material can be in a crude or pre-treated form, e. g. optionally dried and further mechanically and/or chemically modified. However, the chitin is preferably in flake or powder form, e. g. having a mode particle size of 5 to 1000µm, especially 50 to 500µm. Such powders are desirably substantially uniform in particle size.

The particulate chitin is swollen in an alkaline solution, e.g. an at least1OM alkali solution. The solution preferably has a polar or protic solvent, e. g. water, an alcohol (for example methanol), dimethylsulphoxide, dimethylformamide, dimethylacetamide or acetonitrile.

An aqueous alkaline solution is especially preferably used as its environmental impact is lower. The alkali used may be any alkali capable of deacetylating chitin but is preferably an inorganic alkali, in particular an alkali or alkaline earth metal hydroxide, e. g. potassium hydroxide but especially sodium hydroxide. Thus the alkali is preferably a so-called strong base. Lye is especially preferably used. The alkaline solution desirably has a pH equivalent to or greater than that of aqueous 10M NaOH, more preferably that of 15M NaOH.

Typically at least 15M sodium hydroxide, especially at least 18M sodium hydroxide, will be used, e. g. 15 to 25M more preferably 18 to 22M. The alkaline solution will generally be used in a weight ratio relative to the particulate chitin of 100: 1 to 1: 1, preferably 50: 1 to 4: 1, more preferably 30: 1 to 8: 1.

In one preferred embodiment, the chitin is contacted with an alkaline liquid comprising an organic solvent in which chitin is soluble. The liquid may contain water as a cosolvent and water may be added to the chitin liquid mixture to precipitate the dissolved chitin as swollen amorphous particles.

The swelling stage of the process of the invention is preferably performed at a temperature of -6 to 30° C, more preferably 0 to 30° C, especially 15 to 25°C. While in the conventional homogeneous chitin deacetylation reaction, the chitin is brought into solution by cooling to ice temperatures, where the swelling according to the process of the invention is effected at temperatures of 5°C or lower it is terminated before the chitin dissolves and the material which is subjected to the alkaline deacetylation at elevated temperature is a particulate, undissolved, swollen chitin.

The swelling stage is preferably effected for at least 48 hours (e. g. 48 to 75 hours), more preferably at least 54 hours, especially 60 to 120 hours, more especially 65 to 75 hours. As the swelling period is extended, the percentage yield of acid-soluble chitosan produced in a subsequent deacetylation increases; above 75 hours the further increase in yield is small. In general, the swelling time required for β-chitin will be less than that for α-chitin.

The swelling of the chitin may be accelerated by exposing the chitin during swelling to pressure or irradiation, e. g. by crushing or extruding moist chitin or by microwave or ultrasound irradiation. This is a novel aspect of chitin to chitosan conversion.

Desirably the swelling time is selected to be a time sufficient for the chitin to become swollen amorphous chitin, i.e. chitin essentially free from crystalline domains. This can be verified experimentally by X-ray diffraction. In general, chitin is in the swollen amorphous state when it has swollen in volume by at least 1.4 times the volume the chitin has in distilled water, preferably at least 1.5 times.

The amorphous chitin may be produced by swelling as described herein or by precipitation of dissolved chitin.

Following the swelling, the swollen chitin is subjected to alkaline deacetylation at a higher temperature than was used in the swelling stage, e. g. at least 5°C higher preferably at least 25°C higher. Typically the temperature in the deacetylation stage is at least 40°C up to the boiling point of the solution (e. g. up to 130°C), preferably at least 45°C, e.g. in the range 45 to 120°C, more especially 50 to 70°C, particularly 55 to 65°C. The effect of increasing the temperature is to reduce the time required to produce a desired degree of deacetylation. Since the process of the invention is preferably effected so as to yield chitosan having a predetermined F_{A} value, the process will normally involve exposure to the increased deacetylation temperatures for a predetermined time.

Generally the deacetylation reaction will be run for from 30 minutes to 10 hours, preferably 45 minutes to 4 hours.

The alkaline solution used in the deacetylation stage may be the same as the solution used in the swelling stage, optionally with further alkali being added or with excess alkali being removed.

Alternatively the swollen chitin may be recovered and contacted with fresh alkali solution. Such further or fresh alkali solution may be as described above for the swelling stage. For reasons of convenience and economy, the deacetylation stage will generally be carried out using the same alkaline solution as the swelling stage, optionally with further alkaline solution being added.

The deacetylation is preferably effected so as to give a chitosan product having an F_{A} of 0.2 to 0.7, especially 0.45 to 0.6.

Following the deacetylation, the chitosan product will generally be washed, and optionally dried, and milled, e. g. as in conventional chitosan production processes. If desired it can be separated from any residual chitin by acid extraction and precipitation; again this may be effected as in conventional chitosan production processes.

The washing of the chitosan product will typically be carried out with warm water (e.g. 30 to 70°C) and continued until the washing solution reaches pH neutral.

Washing with cold water should generally be avoided as gel formation may occur.

Thus in one preferred embodiment of the invention the process is a process for the production of fully water-soluble chitosan, with a predetermined fraction of acetylated amino groups (F_{A}), by swelling and subsequent deacetylation, characterized in that it comprises:
a) swelling particulate chitin with an at least 10 M alkaline solution at a temperature in the range -6° to 30°C for a period of at least 36 hours,
b) increasing the temperature to a temperature of 45° to 120°C for a predetermined time whereby to cause deacetylation to occur,
c) isolating the chitosan by washing the deacetylated chitin from step (b) with water until the washing solution becomes neutral, and
d) optionally drying and milling the chitosan product.

A major difference between the process of the present invention and the heterogeneous procedures described in the prior art is the implementation of an extended swelling step. The difference between the process of the present invention and the homogeneous deacetylation procedure described in the prior art is quite clear, and includes the avoidance of:
a) the solubilization of chitin with the resultant limitations in the concentration due to viscosity; and
b) the precipitation of the chitosan product (with high to low fraction of acetylated units).

The significantly reduced working volume in the deacetylation step together with the absence of the precipitation step in order to isolate the product is a decisive advantage of the process of the present invention as compared with the prior art homogeneous deacetylation procedures, as it makes the process industrially feasible.

With respect to the previously mentioned heterogeneous deacetylation process, an essentially distinguishing feature of the present invention is that it is possible to produce a product which is fully water-soluble, avoiding the need to extract the product with an acid in order to separate the unreacted chitin from the water-soluble chitosan.

By" fully water-soluble chitosan"as used herein, is meant a chitosan that can be fully dissolved, that is more than 97% wt dissolved in a dilute acid solution, for example as a 1% w/v solution of the chitosan in 1% w/v acetic acid.

For given alkaline solutions, the temperatures and durations of the swelling and deacetylation stages required to produce chitosan having a desired degree of deacetylation may be determined by routine experimentation. By way of example using 20M NaOH, swelling of α-chitin from *Pandalus borealis* at 20°C for 66 to 100 hours, followed by deacetylation at 50°C for 3 hours or 60°C for 1 hour yields chitosan with an F_{A} of about 0.5.

Thus the process of the invention will typically involve swelling for a predetermined time at a predetermined temperature followed by deacetylation for a predetermined time at a predetermined temperature, to produce a product of desired F_{A}. Alternatively however the times and temperatures may be adjusted in a feedback control system which involves monitoring the properties of the reaction medium, e. g. by sampling and testing.

We have also surprisingly found that if the alkali solution swelling is effected for a significantly extended period, e. g. 65 hours or more, chitin deacetylation begins to occur even without the subsequent treatment at elevated temperatures. The degree of deacetylation is dependent on the time period for which swelling is prolonged, and useful chitosan products can be recovered from chitin swollen in this way for 65 to 1000 hours, preferably 70 to 400 hours, more preferably 100 to 300 hours.

The low temperature swelling transforms the chitin from its natural state, which contains crystalline regions separated by amorphous regions (see e.g. US4195175), to one in which the chitin is essentially entirely amorphous. This transformation, e. g. at 10-25°C in 10-25M alkali solution (for example 20M NaOH), generally takes about 36-80 hours. The process can be followed by monitoring the swelling of the chitin or by X-ray diffraction. As swelling comes to an end, the deacetylation begins.

Generally once swelling terminates it takes about 90 hours more for the F_{A} to reach about 0.5, about 250 hours to reach 0.3 and about 600 hours to reach 0.05.

Accordingly, the process can be performed so as to achieve the degree of deacetylation required simply by selecting the pH, temperature and duration of the alkali treatment. The essentially amorphous chitin produced as an intermediate in this process is itself novel and forms a further aspect of the invention. Viewed from this aspect the invention provides particulate amorphous (i.e. noncrystalline) chitin produced by the process (step a) according to the first aspect of the present invention.

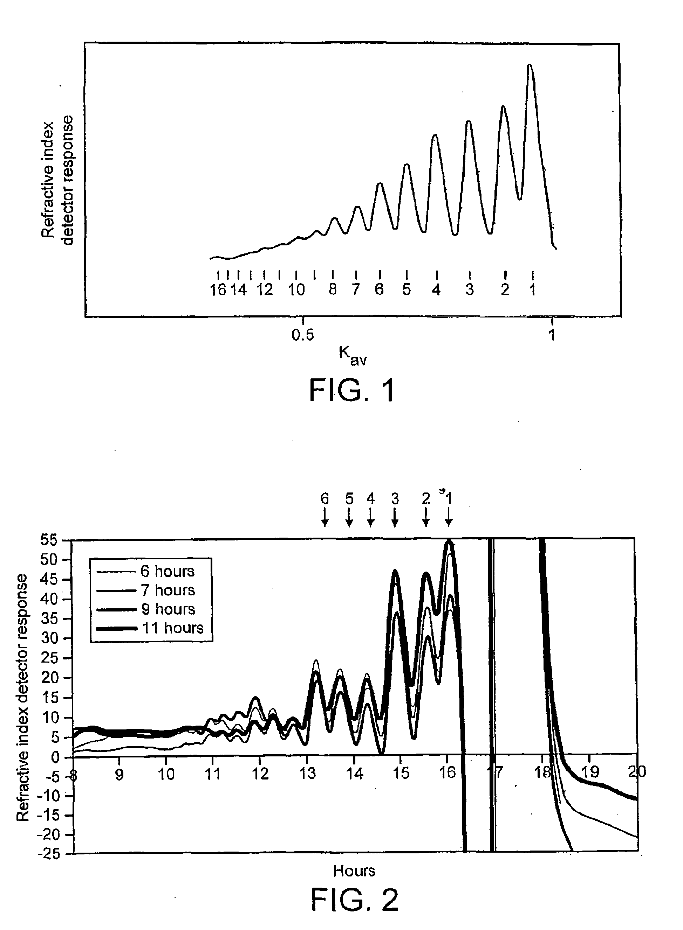

The medium range degree of deacetylation chitosans produced using the processes of the invention in this way have enhanced water solubility at physiological or near physiological pH. Such chitosans may be distinguished from those produced by conventional processes by size exclusion chromatography of the products of their hydrolysis with concentrated acid. This is illustrated by Figures 1 and 2 of the accompanying drawings in which Figure 1 is a size exclusion chromatograph of the acid hydrolysis product of a chitosan produced by homogeneous deacetylation while Figure 2 is a size exclusion chromatograph of the acid hydrolysis product of a chitosan produced by the process of the present invention. As can be seen, for the prior art product the peaks corresponding to monomer, dimer, trimer, etc. progressively decrease in size. In contrast the product according to the invention shows a blockwise pattern.

The chitosan produced by the process of the invention may be used as produced or it may be subject to further chemical or physical modification, e. g. depolymerisation, deacetylation, acetylation, salt formation or other chemical derivatisation, grinding, gel formation, solution formation, fractionation, acid extraction, etc. Typical examples of chitosan derivatisation are widely described in the scientific and patent literature. Conversion to salt form, e.g. by conventional techniques, is a preferred post-production treatment.

The chitosan product or modified product can then be used in any of the fields of use previously suggested for chitosans, e. g. in the preparation of technological, agricultural, food (including human food and animal feed and feed additives), nutraceutical, pharmaceutical, biomedical, veterinary and cosmetic products. It is particularly suitable however as a pharmaceutical or veterinary composition, food or cosmetic additive.

The invention will now be described further with reference to the following nonlimiting Examples.

### Example 1

### Production of acid-soluble chitosan with fraction of acetylated units of about 0.5 as a function of the time of swelling

Chitin isolated from arctic shrimp shells and available from Primex Ingredients ASA (Haugesund, Norway) was used as the raw material. The procedure was performed as follows:
1. To 2.5g of finely ground chitin (milled in a hammer mill to particles less than 1 millimeter) was added 43 ml 20M NaOH. The chitin was then allowed to swell at 20°C for from 0 to 95 hours.
2. The swelled chitin was deacetylated for 1 hour at 60°C in the sodium hydroxide used for the swelling.
3. The dispersion was transferred to a glass-sinter and washed with hot water(50-80°C) to neutral pH.
4. The chitosan was dried, weighed and analysed for its content of acid-soluble chitosan, as described in Ottøy et al. (supra). In addition, the chemical composition (F_{A}) of the acid soluble fraction was determined by proton nmr-spectroscopy. The intrinsic viscosity of the acid soluble fraction was determined at pH 4.5 and an ionic strength of
   0.1 M, as described in Draget et al. (supra).

The results are set forth in Table 1 below.

**Table 1.**

| Time of swelling (hours) | % acid soluble chitosan | F_{A} | Intrinsic viscosity at pH 4.5, and ionic strength 0.1M (mL/g) |
|---|---|---|---|
| 0 | 42 | 0.56 | 500 |
| 36 | 88 | 0.55 | 650 |
| 45 | 93 | 0.54 | 710 |
| 55 | 95 | 0.53 | 920 |
| 66 | 98 | 0.51 | 810 |
| 95 | 100 | 0.48 | 710 |

As can be seen, the yield (as measured by the % acid soluble fraction) increases from 42% with no swelling to 98% with 66 hours of swelling.

### Example 2

### Production of fully water-soluble chitosans with a high fraction of acetylated units(F_{A})

The chitin was the same as used in Example 1, and was swelled as described in Example 1 at 20°C for 66 hours.

The swelled chitin was deacetylated at 50°C, and the time of deacetylation was varied from 1 to 7 hours. The content of acid-soluble chitosan (i. e. in 1% w/v acetic acid), the F_{A} of the acid soluble fraction, and the intrinsic viscosity of the acid soluble fraction were determined. The results are set out in Table 2 below.

**Table 2.**

| Time of deacetylation (hours) | % acid soluble chitosan | F_{A} | Intrinsic viscosity at pH 4.5, ionic strength 0.1M (mL/g) |
|---|---|---|---|
| 1 | 80 | 0.54 | 680 |
| 3 | 99 | 0.48 | 640 |
| 5 | 99 | 0.37 | 590 |
| 7 | 100 | 0.29 | 620 |

As can be seen, the chemical composition (F_{A}) of the chitosan can be controlled by the time of deacetylation, and that the product is essentially fully water-soluble when the time of deacetylation is sufficient to obtain an F_{A} of about 0.5 or less.

The experiment was repeated with the deacetylation temperature increased to 60°C with times of deacetylation of 1, 2 and 3 hours. The content of acidsoluble chitosan, the F_{A} of the acid soluble fraction, and the intrinsic viscosity of the acid soluble fraction were determined. The results are shown in Table 3 below.

**Table 3.**

| Time of deacetylation (hours) | % acid soluble chitosan | F_{A} | Intrinsic viscosity at pH 4.5, ionic strength 0.1M (mL/g) |
|---|---|---|---|
| 1 | 100 | 0.51 | 610 |
| 2 | 100 | 0.35 | 520 |
| 3 | 100 | 0.28 | 490 |

As can be seen, a fully water-soluble chitosan with a high degree of acetylation (F_{A} = 0.51) can be obtained with a deacetylation time of one hour, compared to the 3 hours required at 50°C.

### Example 3

### Production of fully water soluble chitosans with a low degree of deacetylation

Chitin flakes as supplied by Primex Ingredients (Finnsnes, Norway) for industrial production of chitosans was selected as starting material. The chitin used was flake-like particles with an area of up to 1-2 cm² and a flake thickness varying from 20-200µm. The dry matter content of the chitin flakes was 20% wt while the water phase had a pH of 12 due to the content of
NaOH (aq).

The procedure was performed as follows:
1. Chitin flakes were added to 50% (w/w) NaOH (aq) at 22°C at a chitin : NaOH (aq) ratio of 1: 8 and swelled at 22-27°C (as the temperature increased when adding chitin with lower alkali concentration than 50% (w/w)) for 70 hours.
2. The swelled chitin was deacetylated for 1 hour at 60°C in the same alkali.
3. The dispersion was transferred to a sieve and washed with hot water (50-80°C) to neutral pH.
4. The chitosan was dried and the F_{A} of the acid soluble fraction was determined by 1H-NMR spectroscopy. The intrinsic viscosity of the acid soluble fraction was determined in pH 4.5 and an ionic strength of 0.1 M, as described in Draget et. al. (supra).

The results are given in Table 4 below.

**Table 4.**

| Time of swelling (hours) | % acid soluble chitosan | F_{A} | Intrinsic viscosity at pH 4.5, ionic strength 0.1M (mL/g) |
|---|---|---|---|
| 70 | 96% | 0.53 | 1600 |

### Example 4

### Production of fully water-soluble chitosans with a high degree of deacetylation

The chitosan flake starting material was the same as used in Example 1.
1. Chitin flakes were added to 50% (w/w) NaOH (aq) at 22°C at a chitin : NaOH (aq) ratio of 1: 8. The alkali was pressed off to obtain a chitin : NaOH (aq) ratio of 1: 4.
2. The chitin/alkali mass was swelled for 91 hours.
3. The swelled chitin was deacetylated for I hour at 60°C by adding the preswelled chitin/alkali mass to 50% (w/w) NaOH (aq) at a ratio of 1: 8.
4. The resultant dispersion was transferred to a sieve and washed with hot water (50-80°C) to neutral pH.
5. The chitosan was dried and the F_{A} of the acid soluble fraction was determined by 1H-NMR spectroscopy. The intrinsic viscosity of the acid soluble fraction was determined in pH 4.5 and an ionic strength of 0.1M, as described in Draget et. al. (supra).

The results are given in Table 5 below.

**Table 5.**

| Time of swelling. % (hours) | acid soluble chitosan | F_{A} | Intrinsic viscosity at pH 4.5, ionic strength 0.1M (mL/g) |
|---|---|---|---|
| 91 | 95% | 0.48 | 1000 |

### Example 5

### Production of fully water-soluble chitosans with a low degree of acetylation

This Example serves to demonstrate that the process of the invention can be used to produce chitosans comparable to those produced using conventional processes.

Chitin (as used in Example 1) is swelled for 66 hours at20°C as in Example 1. The swelled chitin and unswelled chitin were then deacetylated in 20M NaOH (as in Example 1) at 70, 90 and 120°C.

The results are given in Tables 6 to 8 below.

**Table 6.**

| Swelling: [NaOH] = 20M, temp. = 20°C, time = 66 hours | | | | | | | | |
|---|---|---|---|---|---|---|---|---|
| Deacetylation: [NaOH] = 20M, temp. = 70°C, time = 2-17 hours | | | | | | | | |
| **SWELLING** | | | **DEACETYLATION** | | | **CHITOSAN** | | |
| [NaOH] (M) | temp. (°C) | time (hours) | [NaOH] (M) | temp. (°C) | time (hours) | F_{A} (acid soluble fraction) | [η]* (ml/g) | Acid Soluble Fraction (%) |
| 20 | 20 | 0 | 20 | 70 | 2 | 0.26 | - | 100 |
| 20 | 20 | 0 | 20 | 70 | 4 | 0.20 | 940 | 100 |
| 20 | 20 | 0 | 20 | 70 | 8 | 0.17 | 950 | 100 |
| 20 | 20 | 0 | 20 | 70 | 17 | 0.13 | 800 | 100 |
| 20 | 20 | 66 | 20 | 70 | 2 | 0.25 | 980 | 100 |
| 20 | 20 | 66 | 20 | 70 | 4 | 0.20 | - | 100 |
| 20 | 20 | 66 | 20 | 70 | 8 | 0.16 | 980 | 100 |
| 20 | 20 | 66 | 20 | 70 | 17 | 0.13 | 990 | 100 |

| | | | | | | | | |
|---|---|---|---|---|---|---|---|---|
| * intrinsic viscosity at pH 4.5, ionic strength 0.1 M | | | | | | | | |

**Table 7.**

| Swelling: [NaOH] = 20M, temp. = 20°C, time = 66 hours | | | | | | | | |
|---|---|---|---|---|---|---|---|---|
| Deacetylation: [NaOH] = 20M, temp. = 90°C, time = 1.5 hours | | | | | | | | |
| **SWELLING** | | | **DEACETYLATION** | | | **CHITOSAN** | | |
| [NaOH] (M) | temp. (°C) | time (hours) | [NaOH] (M) | temp. (°C) | time (hours) | F_{A} (acid soluble fraction) | [η]* (ml/g) | Acid Soluble Fraction (%) |
| 20 | 20 | 0 | 20 | 90 | 1 | 0.23 | - | 100 |
| 20 | 20 | 0 | 20 | 90 | 2 | 0.18 | - | 100 |
| 20 | 20 | 0 | 20 | 90 | 3.5 | 0.16 | 870 | 100 |
| 20 | 20 | 0 | 20 | 90 | 5 | 0.12 | 800 | 100 |
| 20 | 20 | 66 | 20 | 90 | 1 | 0.21 | - | 100 |
| 20 | 20 | 66 | 20 | 90 | 2 | 0.16 | - | 100 |
| 20 | 20 | 66 | 20 | 90 | 3.5 | 0.14 | 710 | 100 |
| 20 | 20 | 66 | 20 | 90 | 5 | 0.14 | 910 | 100 |

| | | | | | | | | |
|---|---|---|---|---|---|---|---|---|
| * intrinsic viscosity at pH 4. 5, ionic strength 0.1 M | | | | | | | | |

**Table 8.**

| Swelling: [NaOH] = 20M, temp. = 20°C, time = 66 hours | | | | | | | | |
|---|---|---|---|---|---|---|---|---|
| Deacetylation: [NaOH] = 20M, temp. = 120°C, time = 1.5 hours | | | | | | | | |
| **SWELLING** | | | **DEACETYLATION** | | | **CHITOSAN** | | |
| [NaOH] (M) | temp. (°C) | time (hours) | [NaOH] (M) | temp. (°C) | time (hours) | F_{A} (acid soluble fraction) | [η]* (ml/g) | Acid Soluble Fraction (%) |
| 20 | 20 | 0 | 20 | 120 | 1 | 0.22 | 320 | 100 |
| 20 | 20 | 0 | 20 | 120 | 2 | 0.11 | 660 | 100 |
| 20 | 20 | 0 | 20 | 120 | 3.5 | 0.09 | 640 | 100 |
| 20 | 20 | 0 | 20 | 120 | 5 | 0.08 | 600 | 100 |
| 20 | 20 | 66 | 20 | 120 | 1 | 0.25 | 410 | 100 |
| 20 | 20 | 66 | 20 | 120 | 2 | 0.12 | 620 | 100 |
| 20 | 20 | 66 | 20 | 120 | 3.5 | 0.08 | 560 | 100 |
| 20 | 20 | 66 | 20 | 120 | 5 | 0.07 | 320 | 100 |

| | | | | | | | | |
|---|---|---|---|---|---|---|---|---|
| *Intrinsic viscosity at pH 4.5, ionic strength 0.1 M | | | | | | | | |

### Example 6

Size exclusion chromatography of hydrolysis products Chitosan of F_{A} 0.43 produced by the homogeneous deacetylation method of Sannan et al. Macromol. Chem. 177: 3589-3600 (1976) and chitosan of F_{A} 0.46 produced according to the process of Examples 1 to 4 were hydrolysed in 12M HCl at 40°C for 6-11 hours. The hydrolysis product was then subjected to size exclusion chromatography (as described by Tømmeraas et al. Carbohydrate Res. 333: 137-144 (2001)). The results are shown in Figures 1 and 2 and show a markedly different pattern in peak height over the range of peaks corresponding to mono to hexasaccharide fragments. The peaks marked 1, 2, 3, 4, 5 and 6 correspond to the monosaccharide to hepasaccharide fragments respectively.

## Claims

1. A process for the preparation of chitosan which process comprises:
a) swelling particulate chitin with an alkaline solution at a temperature in the range - 6° to 30°C for a period of at least 24 hours if pressure and/or irradiation is applied or for a period of at least 36 hours if pressure and/or irradiation is not applied, and
b) subsequently reacting the resultant swollen particulate chitin with an alkaline solution at a temperature that is at least 5°C higher than said swelling temperature but not higher than the boiling point of the solution, whereby to cause deacetylation to occur.

2. A process as claimed in claim 1, wherein swelling is effected for a period sufficient to render the particulate chitin amorphous.

3. A process as claimed in any one of claims 1-2, wherein said particulate chitin is swollen with an at least 10 M alkaline solution.

4. A process as claimed in any one of claims 1-3, wherein said particulate chitin is swollen with an aqueous at least 10 M sodium hydroxide solution.

5. A process as claimed in any one of claims 1-4, wherein said particulate chitin is swollen with an aqueous at least 18 M sodium hydroxide solution.

6. A process as claimed in any one of claims 1-5, wherein said particulate chitin is swollen for a period of 48 to 75 hours.

7. A process as claimed in any one of claims 1-6 wherein said swollen particulate chitin is deacetylated at a temperature of 45° to 120° C.

8. A process as claimed in any one of claims 1-7, wherein the particulate chitin is α-chitin.

9. A process as claimed in any one claims 1-8, wherein the chitosan product has an FA of 0.2 to 0.7.

10. A process as claimed in any one of claims 1-9, wherein the chitosan product is recovered by washing and optionally drying the product of the deacetylation.

11. The process as claimed in claim 1, which process comprises:
a) swelling particulate chitin with an at least 10 M alkaline solution at a temperature in the range -6° to 30°C for a period of at least 36 hours,
b) increasing the temperature to a temperature of 45° to 120°C for a predetermined time whereby to cause deacetylation to occur,
c) isolating the chitosan by washing the deacetylated chitin from step (b) with water until the washing solution becomes neutral, and
d) optionally drying and milling the chitosan product.

12. A process as claimed in any one of claims 1 to 11, wherein the chitosan product is subsequently chemically or physically modified.

13. A process as claimed in claim 12, wherein said chitosan product is converted into a chitosan salt.

14. A process as claimed in any one of claims 1-13, wherein the chitosan product is subsequently formulated into a pharmaceutical, veterinary, food or cosmetic product.

15. Particulate amorphous chitin produced by a process as claimed in claim la.

## Patentansprüche

1. Verfahren zur Herstellung von Chitosan, wobei das Verfahren umfasst:
a) Quellen von teilchenförmigem Chitin mit einer alkalischen Lösung bei einer Temperatur im Bereich von -6 bis 30°C über einen Zeitraum von mindestens 24 Stunden, falls Druck und/oder Strahlung angewandt wird, oder für eine Dauer von mindestens 36 Stunden, falls kein Druck und/oder keine Strahlung angewandt wird, und
b) anschließendes Umsetzen des erhaltenen gequollenen teilchenförmigen Chitins mit einer alkalischen Lösung bei einer Temperatur, die um mindestens 5°C höher als die Quelltemperatur, aber nicht höher als der Siedepunkt der Lösung ist, wodurch das Stattfinden einer Deacetylierung bewirkt wird.

2. Verfahren wie in Anspruch 1 beansprucht, wobei das Quellen für eine Dauer ausgeführt wird, die dazu ausreichend ist, das teilchenförmige Chitin amorph zu machen.

3. Verfahren wie in einem der Ansprüche 1-2 beansprucht, wobei das teilchenförmige Chitin mit einer mindestens 10 M alkalischen Lösung gequollen wird.

4. Verfahren wie in einem der Ansprüche 1-3 beansprucht, wobei das teilchenförmige Chitin mit einer wässrigen mindestens 10 M Natriumhydroxidlösung gequollen wird.

5. Verfahren wie in einem der Ansprüche 1-4 beansprucht, wobei das teilchenförmige Chitin mit einer wässrigen mindestens 18 M Natriumhydroxidlösung gequollen wird.

6. Verfahren wie in einem der Ansprüche 1-5 beansprucht, wobei das teilchenförmige Chitin für eine Dauer von 48 bis 75 Stunden gequollen wird.

7. Verfahren wie in einem der Ansprüche 1-6 beansprucht, wobei das gequollene teilchenförmige Chitin bei einer Temperatur von 45 bis 120°C deacetyliert wird.

8. Verfahren wie in einem der Ansprüche 1-7 beansprucht, wobei es sich bei dem teilchenförmigen Chitin um α-Chitin handelt.

9. Verfahren wie in einem der Ansprüche 1-8 beansprucht, wobei das Chitosanprodukt einen Anteil acetylierter Einheiten (F_{A}) von 0,2 bis 0,7 aufweist.

10. Verfahren wie in einem der Ansprüche 1-9 beansprucht, wobei das Chitosanprodukt durch Waschen und wahlweise Trocknen des Produkts der Deacetylierung ausgewonnen wird.

11. Verfahren wie in Anspruch 1 beansprucht, wobei das Verfahren umfasst:
a) Quellen von teilchenförmigem Chitin mit einer mindestens 10 M alkalischen Lösung bei einer Temperatur im Bereich von -6 bis 30°C für eine Dauer von mindestens 36 Stunden,
b) Erhöhen der Temperatur auf eine Temperatur von 45 bis 120°C für eine vorher bestimmte Zeitdauer, wodurch das Stattfinden einer Deacetylierung bewirkt wird,
c) Isolieren des Chitosans durch Waschen des deacetylierten Chitins aus Schritt (b) mit Wasser, bis die Waschlösung neutral wird, und
d) wahlweise Trocknen und Zerkleinern des Chitosanprodukts.

12. Verfahren wie in einem der Ansprüche 1-11 beansprucht, wobei das Chitosanprodukt anschließend chemisch oder physikalisch modifiziert wird.

13. Verfahren wie in Anspruch 12 beansprucht, wobei das Chitosanprodukt zu einem Chitosansalz umgewandelt wird.

14. Verfahren wie in einem der Ansprüche 1-13 beansprucht, wobei das Chitosanprodukt anschließend zu einem pharmazeutischen, tiermedizinischen, Nahrungsmittel- oder Kosmetikprodukt formuliert wird.

15. Teilchenförmiges amorphes Chitin, das durch ein Verfahren wie in Anspruch 1a beansprucht hergestellt wird.

## Revendications

1. Procédé de préparation de chitosan, lequel procédé comprend les étapes de :
a) gonflement de la chitine particulaire avec une solution alcaline à une température dans la gamme de -6 à 30 °C pendant une durée d'au moins 24 heures si une pression et/ou une irradiation sont appliquées ou pendant une durée d'au moins 36 heures si une pression et/ou une irradiation ne sont pas appliquées, et
b) mise en réaction ultérieurement de la chitine particulaire gonflée résultante avec une solution alcaline à une température qui est au moins de 5 °C plus élevée que ladite température de gonflement, mais pas plus élevée que le point d'ébullition de la solution, de manière à générer une désacétylation.

2. Procédé selon la revendication 1, dans lequel le gonflement est effectué pendant une durée suffisante pour rendre amorphe la chitine particulaire.

3. Procédé selon l'une quelconque des revendications 1 et 2, dans lequel ladite chitine particulaire est gonflée avec une solution alcaline à au moins 10 M.

4. Procédé selon l'une quelconque des revendications 1 à 3, dans lequel ladite chitine particulaire est gonflée avec une solution aqueuse d'hydroxyde de sodium à au moins 10 M.

5. Procédé selon l'une quelconque des revendications 1 à 4, dans lequel ladite chitine particulaire est gonflée avec une solution aqueuse d'hydroxyde de sodium à au moins 1 M.

6. Procédé selon l'une quelconque des revendications 1 à 5, dans lequel ladite chitine particulaire est gonflée pendant une durée de 48 à 75 heures.

7. Procédé selon l'une quelconque des revendications 1 à 6, dans lequel ladite chitine particulaire gonflée est désacétylée à une température de 45 à 120°C.

8. Procédé selon l'une quelconque des revendications 1 à 7, dans lequel la chitine particulaire est l'α-chitine.

9. Procédé selon l'une quelconque des revendications 1 à 8, dans lequel le produit de chitosan a un FA de 0,2 à 0,7.

10. Procédé selon l'une quelconque des revendications 1 à 9, dans lequel le produit de chitosan est récupéré par lavage et séchage facultatif du produit de la désacétylation.

11. Procédé selon la revendication 1, lequel procédé comprend les étapes de :
a) gonflement de la chitine particulaire avec une solution alcaline à au moins 10 M à une température dans la gamme de -6 à 30 °C pendant une durée d'au moins 36 heures,
b) augmentation de la température à 45 à 120°C pendant une durée prédéterminée de façon à générer une désacétylation,
c) isolement du chitosan par lavage de la chitine désacétylée de l'étape (b) avec de l'eau jusqu'à ce que la solution de lavage devienne neutre, et
d) séchage et broyage facultatifs du produit de chitosan.

12. Procédé selon l'une quelconque des revendications 1 à 11, dans lequel le produit de chitosan est ultérieurement modifié chimiquement ou physiquement.

13. Procédé selon la revendication 12, dans lequel le produit de chitosan est converti en un sel de chitosan.

14. Procédé selon l'une quelconque des revendications 1 à 13, dans lequel le produit de chitosan est ultérieurement formulé en un produit pharmaceutique, vétérinaire, alimentaire ou cosmétique.

15. Chitine amorphe particulaire produite par un procédé selon la revendication 1a.
